# EUROPEAN PATENT APPLICATION

(11) **EP 4 542 690 A1**
(43) Date of publication of application: **23.04.2025**
(21) Application number: 23865303.4
(22) Date of filing: 31.08.2023
(51) Int. Cl.: H01M 4/86, B01J 31/28, B01J 33/00, B01J 35/60, B01J 37/04, B01J 37/08, H01M 4/88, H01M 4/90, H01M 4/92, H01M 8/10

(54) **CATALYST FOR SOLID POLYMERIC FUEL CELL, AND METHOD FOR PRODUCING CATALYST FOR SOLID POLYMERIC FUEL CELL**

(30) Priority: 13.09.2022 JP 2022145162
(71) Applicant: Tanaka Kikinzoku Kogyo K.K., Tokyo 100-6422 (JP)
(72) Inventor: AKIYAMA, Tomohiro, Hiratsuka-shi, Kanagawa 254-0021 (JP)
(74) Representative: Weickmann & Weickmann PartmbB
(86) International application number: PCT/JP2023/031769
(87) International publication number: WO 2024/057948

(57) **Abstract**

The present invention relates to a catalyst for a polymer electrolyte fuel cell in which catalyst particles containing Pt as an essential catalyst metal are supported on a carbon powder carrier. In the present invention, the catalyst includes a barrier layer of a hydrophobic porous polymer covering the carbon powder carrier and/or at least one of the catalyst particles. Owing to the presence of this porous barrier layer, the catalyst of the present invention has a peak of a log differential pore volume (dV/d(logD)) in a region of a pore size of 50 nm or more and 200 nm or less in a pore distribution curve based on a log differential pore volume distribution. The barrier layer contains any one of porous polymers of polyvinyl acetate, polylactic acid, polymethyl methacrylate, polypropylene, polyvinyl chloride, polyethylene, polyacrylonitrile, polyvinyl alcohol, polyvinylidene fluoride, polyethylene imine, and polystyrene.

## Description

### BACKGROUND OF THE INVENTION

### FIELD OF THE INVENTION

The present invention relates to a catalyst for a polymer electrolyte fuel cell, and in particular to a catalyst that is contained in a cathode (air electrode) of a polymer electrolyte fuel cell, and is excellent in initial activity as well as durability.

### DESCRIPTION OF THE RELATED ART

Polymer electrolyte fuel cells have been put to practical use as vehicle power sources and household power sources. A polymer electrolyte fuel cell is mainly configured by a hydrogen electrode (anode) for supplying a fuel containing hydrogen, an air electrode (cathode) supplied with an oxidizing agent gas such as oxygen or air, and a membrane electrode assembly (MEA) including respective elements of a solid polymer electrolyte membrane sandwiched between these electrodes. Then, a plurality of unit cells each including a separator having a gas passage provided outside the electrodes are stacked to constitute a polymer electrolyte fuel cell.

Each electrode of a polymer electrolyte fuel cell is formed by mixing a catalyst and a solid polymer electrolyte (ionomer). As the catalyst for a polymer electrolyte fuel cell, a platinum catalyst (Pt catalyst) in which a precious metal, particularly platinum (Pt) is supported as a catalyst metal is conventionally widely used. Pt used as the catalyst metal has high activity for accelerating an electrode reaction in both an air electrode and a hydrogen electrode. Besides, for the purpose of reducing catalyst cost by reducing the amount of Pt used, and for the purpose of improving the catalytic activity as compared with a conventional platinum catalyst, examples of studies on an alloy catalyst in which an alloy of Pt and another transition metal is supported have been increasing. For example, a Pt-Co catalyst (binary catalyst) using an alloy of Pt and cobalt (Co) as a catalyst particle, and a ternary catalyst using an alloy of another transition metal such as manganese in addition to cobalt have been reported.

It is deemed that, through the above-described studies on a catalyst metal constituting a catalyst particle, the catalytic activity (initial activity) of a catalyst for a polymer electrolyte fuel cell has been improved. It is durability of the catalyst that has been more highly demanded in accordance with the improvement, and it has become significant how the deterioration of the activity of a catalyst caused in driving the polymer electrolyte fuel cell for a long period of time is to be suppressed.

In this regard, many of equipment in which a polymer electrolyte fuel cell is used is operated in a mode in which load fluctuation occurs in the catalyst. For example, in a polymer electrolyte fuel cell used as a vehicle power source, load fluctuation is caused not only in repeating start-stop of the vehicle but also during idling and driving, and a load fluctuation potential cycle of cycling between a low potential and a high potential is given to the catalyst. The deterioration of the activity of the catalyst is liable to be accelerated in such load fluctuation operation mode.

One direct cause of the deterioration of the catalyst is decrease of an effective surface area (also referred to as electrochemical surface area: ECSA) caused by coarsening of catalyst particles. One cause of the coarsening of catalyst particles is movement of catalyst particles (platinum) and aggregation thereof under the load fluctuation described above. Besides, in the load fluctuation potential cycle described above, there occurs a phenomenon that a portion of platinum having dissolved under a high potential load precipitates under a low potential load. In particular, a solid polymer electrolyte membrane is generally a strongly acidic resin membrane having a sulfonic acid group or the like, and hence has solubility increased by water generated through a fuel cell reaction. Therefore, owing to platinum having precipitated in the vicinity of a catalyst particle, the catalyst particle is coarsened.

Besides, when platinum dissolves as described above, platinum ions may diffuse on the interface between the cathode and the solid polymer electrolyte membrane. At this point, the platinum ions are reduced by hydrogen cross-leaked from the anode via the polymer solid electrolyte membrane, resulting in forming a platinum band in which platinum particles are arranged in a line on the interface. The formation of the platinum band can be a cause of reduction of the amount of platinum in the catalyst electrode, which can be also a cause of the deterioration due to the decrease of the effective surface area. Such deterioration mechanisms in a platinum catalyst are similarly observed in a platinum catalyst using an alloy with another transition metal, and deterioration is caused by the coarsening of catalyst particles through dissolution/precipitation of the transition metal together with platinum, and by the decrease of the effective surface area.

As an attempt to improve the durability of a catalyst for a polymer electrolyte fuel cell using platinum or a platinum alloy as a catalyst particle, the present applicant has proposed some measures. For example, a catalyst in which a prescribed fluorine compound is supported on the catalyst to have a water repellent layer has been disclosed (Patent Document 3). In this catalyst, water generated through a fuel cell reaction is rapidly discharged owing to the water repellent layer to suppress the dissolution of the catalyst metal via water, and thus, the durability is ensured. Alternatively, the present applicant has disclosed a platinum catalyst obtained through a high temperature heat treatment at 1000°C or more for adjusting the particle size of a catalyst particle, and optimizing the valence of platinum present on the surface of the catalyst particle (Patent Document 4). Besides, the present applicant has disclosed a catalyst in which the particle size distribution of catalyst particles is adjusted to reduce a ratio of catalyst particles having a very small size (Patent Document 5).

### Prior Art Document

### Patent Document

Patent Document 1
   Japanese Patent Application Laid-Open No. 2010-27364
Patent Document 2
   Japanese Patent No. 5152942
Patent Document 3
   Japanese Patent No. 6053223
Patent Document 4
   International Publication No. WO2018/194007
Patent Document 5
   International Publication No. WO2019/065443

### SUMMARY OF THE INVENTION

### Technical Problem

The above-described various catalysts improved in the durability cannot, however, sufficiently meet the demand in consideration of practical use and spread of polymer electrolyte fuel cells in the future. The catalyst including the water repellent layer of the fluorine compound of Patent Document 3 is insufficient in the effect of suppressing the deterioration of the activity. The catalyst in which the particle size/particle size distribution of catalyst particles is adjusted, or the valence of platinum is adjusted as in Patent Documents 4 and 5 is superior to a conventional platinum catalyst and the like in activity retention in a state obtained after a long time has elapsed, but is rather inferior in the initial activity. Such a measure in which the initial activity is somewhat sacrificed for improving the durability cannot be a necessary and sufficient measure.

The present invention was devised under the background described above, and provides a catalyst for a polymer electrolyte fuel cell using Pt as an essential catalyst metal, further improved in durability with favorable initial activity obtained.

### Solution to Problem

The present invention solving the above-described problem is drawn to a catalyst for a polymer electrolyte fuel cell in which catalyst particles containing Pt as an essential catalyst metal are supported on a carbon powder carrier, wherein the catalyst contains a barrier layer of a hydrophobic porous polymer covering the carbon powder carrier and/or at least one of the catalyst particles.

Assuming that the cause of the deterioration of the activity of a catalyst for a polymer electrolyte fuel cell is coarsening caused due to movement of a catalyst particle, or dissolution/precipitation of platinum or the like, means for suppressing the deterioration can be inhibition of the movement of a catalyst particle, and provision of a barrier against diffusion of a platinum ion or the like generated through the dissolution. In the catalyst for a polymer electrolyte fuel cell of the present invention, the carrier and/or the catalyst particle is covered with a barrier layer having these effects.

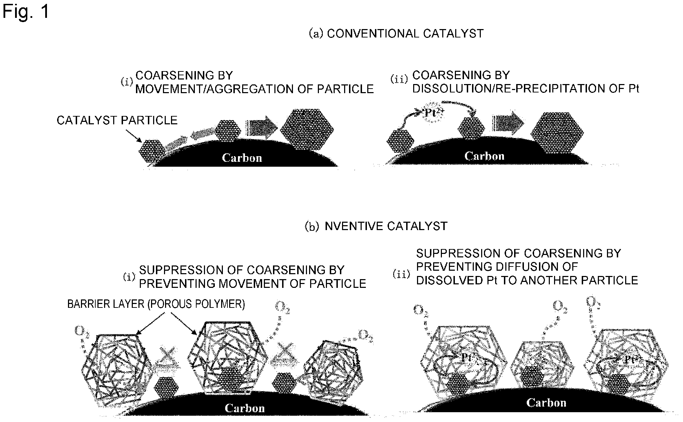

The mechanism of suppressing the deterioration of the activity by the barrier layer of the catalyst for a polymer electrolyte fuel cell of the present invention will now be described with reference to Figs. 1(a) and 1(b). As described above, in a conventional catalyst for a polymer electrolyte fuel cell (Fig. 1(a)), occurrence of coarsening of a catalyst particle because of movement of the catalyst particle to aggregate with surrounding catalyst particles (Fig. 1(a)(i)), and coarsening of a second catalyst particle because of precipitation, occurring in the vicinity of the second catalyst particle, of a metal ion generated through dissolution of the catalyst metal (Fig. 1(a)(ii)) can deteriorate the activity. On the contrary, in the catalyst of the present invention (Fig. 1(b)), a barrier layer covering a catalyst particle has an effect of capturing the catalyst particle, or a barrier layer covering the surface of the carrier has an effect of inhibiting the movement of a catalyst particle, and thus, the aggregation/coarsening with surrounding catalyst particles is suppressed (Fig. 1(b)(i)). Besides, in the catalyst particle covered with the barrier layer, even when dissolution occurs, the barrier layer interrupts a platinum ion or the like to suppress diffusion to the outside. In this manner, precipitation in the vicinity of the second catalyst particle can be reduced (Fig. 1(b)(ii)). In addition to these effects of suppressing the coarsening of catalyst particles, the barrier by the barrier layer can prevent a platinum ion from diffusing to a solid electrolyte membrane, and can suppress formation of a platinum band on the interface between a cathode and the solid polymer electrolyte membrane. The suppression of the formation of a platinum band reduces the decrease of an effective surface area otherwise caused by the decrease of the catalyst metal component, and thus makes a contribution to suppression of the activity deterioration.

As the structure of the barrier layer, however, when a film-like layer for blocking a catalyst particle from the outside is used, the activity (initial activity) of the catalyst deteriorates. For the progress of an electrode reaction, supply of a reaction gas (oxygen) to the surface of the catalyst particle is indispensable, and it is also necessary to discharge a water molecule, that is, a reaction product, from the vicinity of the catalyst particle. The barrier layer needs to have permeability to the reaction gas and the water molecule. In the present invention, the barrier layer has a porous structure of a hydrophobic polymer, and thus, is provided with the permeability to the reaction gas and the like with the catalytic activity ensured. On the other hand, since the barrier layer contains a hydrophobic polymer, water containing a dissolved platinum ion and the like is difficult to be discharged through the barrier layer, and thus, the diffusion of the platinum ion and the like is suppressed. Now, the structure of and the production method for the catalyst for a polymer electrolyte fuel cell of the present invention having the mechanism for suppressing the deterioration described above will be described in detail.

### (A) Structure of Catalyst for Polymer Electrolyte Fuel Cell of Present Invention

As described above, a catalyst for a polymer electrolyte fuel cell of the present invention is characterized by that a barrier layer is formed on a catalyst using platinum or a platinum alloy as a catalyst particle. As the catalyst in which the barrier layer is used, a conventional catalyst for a polymer electrolyte fuel cell can be used. In the following description, a catalyst for a polymer electrolyte fuel cell suitable as a target of the present invention will be described, and thereafter, the structure and the properties of the barrier layer will be described.

### (i) Catalyst Particle

The catalyst particle of the catalyst for a polymer electrolyte fuel cell of the present invention contains Pt as an essential constituent metal, and there are no other essential conditions in the composition/structure. Pt is used as an essential catalyst metal because Pt is highly active, and particularly has high initial activity. In the catalyst for a polymer electrolyte fuel cell of the present invention, not only a catalyst particle containing Pt but also a catalyst particle containing a Pt alloy obtained by alloying another metal M with Pt is used.

When a catalyst particle containing a Pt alloy is used, the metal M alloyed with Pt is at least any one of Co, Ni, Mn, Fe, Ti, Zr, and Sn. When these metals are alloyed, a catalyst with high activity can be obtained with the amount of Pt used as the catalyst metal reduced. Specific examples of the Pt alloy include binary Pt alloys such as a Pt-Co alloy, and a Pt-Ni alloy, and ternary Pt alloys such as a Pt-Co-Mn alloy, a Pt-Co-Zr alloy, and a Pt-Co-Ni alloy.

Also as an alloy composition employed in using the catalyst particle of a Pt alloy, compositions of conventional techniques can be employed. For example, in a Pt-Co alloy catalyst of a binary alloy, a composition in a molar ratio of Pt:Co of 1:0.14 to 0.67 is preferred. In a Pt-Co-Mn alloy catalyst of a ternary alloy, a molar ratio of Pt:Co:Mn is preferably 1:0.25 to 0.28:0.07 to 0.10, and more preferably Pt:Co:Mn is 1:0.26 to 0.27:0.08 to 0.09. In a Pt-Co-Zr alloy catalyst of the same ternary alloy, a molar ratio of Pt:Co:Zr is preferably 3:0.5 to 1.5:0.1 to 3.0, and more preferably Pt:Co:Zr of 3:0.5 to 1.5:0.2 to 1.8. These ternary alloy catalysts are catalysts caused to exhibit higher initial activity than a Pt-Co catalyst by adding Mn and Zr to the Pt-Co catalyst. However, excessive addition of Mn or Co deteriorates the activity on the contrary, and hence the above-described range is an appropriate range.

As the particle size of the catalyst particle, an average particle size of 2 to 10 nm is preferred. This is because when the particle size is less than 2 nm, a long-term activity retention property cannot be definitely obtained, and when it is more than 10 nm, the initial activity of the resultant catalyst cannot be sufficiently obtained.

The average particle size of the catalyst particle can be obtained by, for example, calculating an average of particle sizes of a plurality of catalyst particles measured based on an image obtained by observation with an electron microscope such as a TEM. The measurement of a particle size in an observation image can be performed not only visually but also by image analysis. It is noted that the average particle size of the catalyst particle is measured preferably with 100 or more catalyst particles optionally selected.

### (ii) Carbon Powder Carrier

As the carbon powder carrier that supports the catalyst particle, a carbon powder having a specific surface area of 150 m²/g or more and 2000 m²/g or less is preferably used. When the specific surface area is 150 m²/g or more, the area in which the catalyst adheres can be increased, and hence the effective surface area can be increased by dispersing the catalyst particles in a high state. On the other hand, when the specific surface area is more than 2000 m²/g, a presence ratio of ultrafine pores (of less than about 20 angstrom) that an ion exchange resin is difficult to enter in forming an electrode is increased, and hence the use efficiency of the catalyst particle is reduced. The specific surface area of the carbon powder carrier is more preferably 250 m²/g or more and 1200 m²/g or less.

In addition, in the catalyst of the present invention, the supporting density of the catalyst particle is preferably 30 to 70% in consideration of the performance as an electrode of a polymer electrolyte fuel cell. Here, the supporting density refers to a ratio of the mass of the catalyst particle supported on the carrier (a total mass of platinum and the metal M supported) to the mass of the entire catalyst.

### (iii) Barrier Layer

The barrier layer is a layer for suppressing coarsening of the catalyst particle and suppressing activity deterioration by inhibiting movement of the catalyst particle and inhibiting distant diffusion of a metal ion generated when the catalyst particle dissolves. The barrier layer is formed to cover the carrier and/or the catalyst particle. The barrier layer may entirely cover the catalyst, or may be distributed on the surface of the catalyst in the shape of dots or islands for partially covering the catalyst. Besides, the barrier layer may cover at least one of catalyst particles, and may cover a plurality of catalyst particles.

The barrier layer contains a hydrophobic porous polymer. A hydrophobic polymer refers to a polymer having low affinity with water, and having a property difficult to be dissolved or mixed with water. Specific examples of the hydrophobic polymer contained in the barrier layer include polyvinyl acetate (PVAC), polyvinyl propionate (PVPR), polylactic acid (PLA), polymethyl methacrylate (PMMA), polyethyl methacrylate (PEMA), polymethyl acrylate (PMA), polyethyl acrylate (PEA), polyethylene (PE), polypropylene (PP), polyvinyl chloride (PVC), polyacrylonitrile (PAN), polyvinyl alcohol (PVA), polyethylene imine (PEI), and polystyrene (PS). As described below, the barrier layer of the present invention is formed by dissolving a hydrophobic polymer in an organic solvent such as alcohol once, and then precipitating the polymer on the catalyst. Therefore, a polymer soluble in an organic solvent is preferred. Besides, as the solvent for forming the barrier layer, a mixed solvent of a hydrophilic organic solvent and water is used in some cases. As a polymer capable of efficiently forming a porous polymer layer in consideration of the solubility in these solvents, a polymer having an ester bond in the structure of the monomer is preferred. Specifically, more preferable examples of the hydrophobic polymer include PVAC, PVPR, PLA, PMMA, PEMA, PMA, and PEA.

The barrier layer is a hydrophobic polymer, and has a porous structure for ensuring permeability to a reaction gas necessary for the progress of a fuel cell reaction. The barrier layer having this porous structure has a pore with a pore size of 50 nm or more and 200 nm or less.

The above-described pore with a pore size of 50 nm or more and 200 nm or less is a pore not contained in a usual catalyst using a carbon fine powder as a carrier. Therefore, the pore of the barrier layer definitely affects the pore distribution in the entire catalyst. Specifically, the catalyst of the present invention exhibits a peak derived from the barrier layer in a region of a pore size of 50 nm or more and 200 nm or less in a pore distribution curve based on a log differential pore volume distribution. A log differential pore volume indicates the relationship between the size and the volume of a pore of a catalyst, and is a value (dV/d(logD)) obtained by dividing a differential pore volume dV corresponding to an increment of the pore volume between measurement points of the pore size by a logarithmic difference d (logD) of the pore size. The log differential pore volume distribution is a distribution curve obtained by plotting log differential pore volumes against an average pore size of each section. In the measurement of a pore distribution in a catalyst, a general gas adsorption method can be employed, and an adsorption gas used therein is preferably nitrogen (N₂).

In the present invention, the term "to exhibit a peak in a region of a pore size of 50 nm or more and 200 nm or less" refers to "to exhibit a peak including the maximum value of the log differential pore volume (dV/d(logD)) in the region of a pore size of 50 nm or more and 200 nm or less in the above-described pore distribution curve". In the catalyst of the present invention, the height of the peak in the region of a pore size of 50 nm or more and 200 nm or less is preferably 1.0 or more. A catalyst having a peak height less than 1.0 in the region of a pore size of 50 nm or more and 200 nm or less is substantially the same as a catalyst having no barrier layer, and hence, the effects exhibited by the barrier layer cannot be expected. It is noted that the upper limit of the height of the peak in the region of a pore size of 50 nm or more and 200 nm or less is preferably 3.0 or less. It is noted that increase of the log differential pore volume value due to a pore of the carbon fine powder used as the carrier may be observed in the catalyst of the present invention. The appearance of a small peak in the pore distribution curve is, however, not essential in the present invention, and in using some types of the carbon fine powder, a peak of the log differential pore volume value may appear only in the region of a pore size of 50 nm or more and 200 nm or less.

Whether or not the barrier layer is present in the catalyst of the present invention, namely, the presence and the chemical structure of the polymer on the surface of the catalyst, can be analyzed by TOF-SIMS (Time of Flight Secondary Ion Mass Spectrometry). TOF-SIMS is a method for mass separation, by utilizing a difference in the time of flight, of an ion (secondary ion) released from a sample surface through irradiation of the sample with an ion beam (primary ion). At this point, since the time of flight of the secondary ion is in proportion to a square root of the weight, a metal contained in the sample can be quantitatively analyzed. Besides, since chemical structure information on an organic substance (polymer) can be obtained by SIMS, this method is suitable to the present invention. In addition, since information on the type of element/molecule present in a top surface portion (with a depth of 1 nm or less) of the sample can be obtained by TOF-SIMS, the detection intensity of a Pt ion is varied depending on whether or not the sample is covered, and thus, the covering with the barrier layer may be confirmed.

In the catalyst for a polymer electrolyte fuel cell of the present invention, the barrier layer imparts hydrophobicity to the catalyst in addition to the effect of suppressing the coarsening of the catalyst particle. This improvement of the hydrophobicity also makes a contribution to the deterioration suppression and the durability improvement of the catalyst. One of causes of the activity deterioration of the catalyst is dissolution of the catalyst particle (Pt), and water is involved in the dissolution of the catalyst particle. Since the barrier layer imparts the hydrophobicity to the catalyst, discharge of water generated through the fuel cell reaction is accelerated, and thus, the dissolution of the catalyst particle can be reduced.

The catalyst for a polymer electrolyte fuel cell of the present invention including the barrier layer as described so far is excellent, as compared with a catalyst having no barrier layer, in durability because the activity deterioration caused as the reaction time increases is suppressed although the initial activity is equivalent or higher. Therefore, when the catalyst particle having the composition/particle size described above is appropriately supported on a suitable carbon powder carrier as a base catalyst, the resultant can be a catalyst excellent in balance between the initial activity and the durability.

### (B) Method for Producing Catalyst for Polymer Electrolyte Fuel Cell of Present Invention

Next, a method for producing a catalyst for a polymer electrolyte fuel cell of the present invention will be described. The catalyst of the present invention is produced by subjecting a Pt catalyst or a Pt alloy catalyst to a treatment for forming a barrier layer. At this point, as the treatment for forming a barrier layer, a method in which the catalyst is immersed in a solution in which a polymer is dissolved, and then the polymer is precipitated on the catalyst by performing a treatment for separating the polymer from the solution can be employed. In other words, a method for producing a catalyst of the present invention is a method for producing a catalyst for a polymer electrolyte fuel cell including a step of providing a catalyst in which catalyst particles containing Pt as an essential catalyst metal are supported on a carbon powder carrier, a step of providing a polymer solution in which a polymer is dissolved in an organic solvent, and a step of dispersing the catalyst in the polymer solution, and then heating or cooling the polymer solution or adding water to the polymer solution to precipitate the polymer on the surface of the catalyst, thereby forming a barrier layer.

For the step of providing a Pt catalyst or a Pt alloy catalyst on which a barrier layer is to be formed, a catalyst to be treated may be precedently produced, or a commercially available catalyst may be provided. In the production of a catalyst for a polymer electrolyte fuel cell, a Pt catalyst can be produced by appropriately supporting Pt on a carbon fine powder carrier, and can be produced appropriately through a post-treatment such as a heat treatment. Besides, a Pt alloy catalyst can be produced, with a Pt catalyst used as a precursor, by supporting thereon a metal (M) to be alloyed, followed by performing an alloying heat treatment or the like.

The method for producing a Pt catalyst is based on a general liquid phase reduction method as a basic step. In the liquid phase reduction method, a Pt catalyst can be produced by producing a mixture solution by mixing a carbon powder carrier and a Pt compound solution, and adding a reducing agent to the mixture solution to reduce/precipitate Pt to be supported on the carbon powder carrier. Examples of the Pt compound solution include a dinitrodiammine platinum nitrate solution, a chloroplatinic acid aqueous solution, a potassium chloroplatinate aqueous solution, and a hexaammineplatinum hydroxide solution. Examples of the reducing agent to be added to the mixture solution include alcohols (such as methanol, and ethanol). A Pt particle is supported on the carrier by appropriately performing heating for refluxing after adding the reducing agent. Through this reducing treatment, a Pt catalyst is obtained. Alternatively, it can be used as a precursor for producing a Pt alloy catalyst.

The Pt catalyst after the reducing treatment may be subjected to a heat treatment if necessary. As the temperature of this heat treatment, a heating temperature is set in a comparatively high temperature region of 800°C or more and 1200°C or less. When the temperature is less than 800°C, the resultant catalyst is difficult to obtain good durability. Besides, when the heat treatment is performed at more than 1200°C, it is concerned that the initial activity may be deteriorated due to the coarsening of the catalyst particle. The heat treatment is performed preferably in a non-oxidizing atmosphere such as a reducing gas atmosphere or an inert gas atmosphere, and particularly preferably in a reducing gas atmosphere. Specifically, a hydrogen gas atmosphere (of 50% or more of a hydrogen gas) is preferred.

A Pt alloy catalyst using a Pt alloy (Pt-M alloy) as a catalyst particle can be produced by supporting a metal M on the Pt catalyst produced as described above, and subjecting the resultant to a heat treatment for alloying. The liquid phase reduction method can be employed also for supporting the metal M. In other words, the Pt catalyst is caused to contact with a metal salt solution of the metal M, and the resultant is subjected to a reducing treatment to precipitate M in a metal state in the vicinity of the Pt particle. As the metal salt solution of the metal M, an aqueous solution of a chloride, nitrate, acetate, or sulfate of each metal can be used. Besides, the composition of the Pt alloy to be used as the catalyst particle can be adjusted by adjusting the amount of the metal M to be supported.

After supporting the metal M on the Pt catalyst, the resultant is subjected to a heat treatment for alloying Pt with the metal M. The temperature of this heat treatment is 700 to 1200°C. When the heat treatment is performed at less than 700°C, the respective metals are insufficiently alloyed, and hence the resultant catalyst is poor in the activity. When the heat treatment is performed at more than 1200°C, it is concerned that the resultant catalyst particle may be coarsened. This heat treatment is performed preferably in a non-oxidizing atmosphere, and is performed particularly preferably in a reducing atmosphere (such as a hydrogen gas atmosphere). Through the heat treatment for alloying, a catalyst using the Pt alloy as the catalyst particle can be obtained.

In the present invention, on the Pt catalyst or the Pt alloy catalyst provided as described above, the barrier layer is formed. In the formation of the barrier layer, a solution of a hydrophobic polymer (polymer solution) to be formed into the barrier layer is first prepared. A solvent of the polymer solution is preferably an organic solvent. Specifically, alcohols (ethanol, methanol, propanol, butanol, pentanol, and hexanol), acetone, ethylene glycol, dimethyl sulfoxide (DMSO), 1,4-dioxane, N,N-dimethylformamide (DMF), dimethyl ether, diethyl ether and the like are preferred. Alternatively, as the solvent of the polymer solution, a mixed solvent obtained by mixing a hydrophilic organic solvent such as alcohol or acetone with water can be used in some cases. In a polymer solution using the mixed solvent, the solubility of the polymer can be adjusted in some cases by changing the mixing ratio between the organic solvent and water. It can be determined, depending on the solubility of the polymer used for forming the barrier layer, which of the solvents is to be selected. For example, when PVAC is to be used for forming the barrier layer, an alcohol can be used as the solvent. Alternatively, in using PLA, acetone is preferred, and in using PMMA, an alcohol or a mixed solvent of an alcohol and water (warm water) is preferred. The preparation of the polymer solution can be performed with the solution heated at a temperature not exceeding the boiling point of the solvent if heating is necessary for dissolving the polymer. The amount of the polymer contained in the polymer solution, in terms of mass%, is preferably 2.5 mass% or more and 10 mass% or less based on the mass of the entire catalyst (the total mass of the polymer and the catalyst). When the amount of the polymer is excessively increased, performance deterioration due to inhibition of gas dispersion and increase of electronic resistance is caused. Besides, when the amount is less than 2.5 mass%, it is difficult to form an effective barrier layer. It is noted that the polymer solution may be provided in an amount equal to or more than an amount sufficient for immersing the catalyst to be treated.

Next, the catalyst (Pt catalyst or Pt alloy catalyst) to be treated is immersed in the polymer solution for mixing to obtain a slurry. At this point, for the production of a slurry, the polymer solution may be added to the catalyst, or the catalyst may be precedently dispersed in a solvent, to which the polymer solution may be added. Besides, in the mixing, the slurry may be stirred or heated if necessary.

Then, the polymer contained in the slurry is precipitated to form a barrier layer on the surface of the catalyst. An example of an operation for precipitating the polymer includes an operation of heating or cooling the slurry produced as described above, or adding water thereto. The precipitation operation is selected in accordance with the type of the polymer. For example, in using PVAC or PLA, the polymer is precipitated by adding, to the slurry, water in an amount of 10 vol% or more based on the entire amount of the slurry. Alternatively, some polymers are precipitated by keeping the slurry at a high temperature (of 50°C or more) and cooling it to a low temperature (of 40°C or less). Through such an operation, the polymer is precipitated to form the barrier layer. After forming the barrier layer, the catalyst of the present invention can be obtained by extracting the catalyst from the slurry by filtration or the like, and appropriately washing the resultant.

### Advantageous Effects of Invention

As described above, the present invention relates to a catalyst for a polymer electrolyte fuel cell in which a conventional catalyst particle containing Pt is supported, and provides a catalyst excellent in durability.

### BRIEF DESCRIPTION OF THE DRAWINGS

Fig. 1 is a conceptual diagram for explaining a deterioration mechanism of a catalyst for a polymer electrolyte fuel cell, and an effect of suppressing the deterioration by a barrier layer;
Fig. 2 is a pore distribution curve of a catalyst for a polymer electrolyte fuel cell produced in First Embodiment (barrier layer: PVAC);
Fig. 3 is a diagram of water vapor adsorption isotherms of the catalyst of First Embodiment and a catalyst for a polymer electrolyte fuel cell of Comparative Example;
Fig. 4 illustrates SEM images and cross-sectional backscattered electron images of cross sections of MEAs produced in First Embodiment (PVAC: 5 mass%) and Comparative Example;
Fig. 5 illustrates results of EPMA line analysis of the cross sections of MEAs produced in First Embodiment (PVAC: 5 mass%) and Comparative Example; and
Fig. 6 illustrates particle size distributions obtained before and after deterioration of catalyst particles of the catalysts of First Embodiment (PVAC: 5 mass%) and Comparative Example.

### DETAILED DESCRIPTION OF THE PREFERRED EMBODIMENTS

First Embodiment: A preferred embodiment of the present invention will now be described. In the present embodiment, a catalyst for a polymer electrolyte fuel cell was obtained by producing a Pt catalyst, and forming a porous polymer layer of PVAC on the Pt catalyst as a barrier layer. Then, an MEA and a fuel cell (single cell) using this catalyst as a cathode electrode were produced to evaluate the initial activity and durability thereof.

### [Production of Pt Catalyst]

A production container was charged with 996.42 mL of a dinitrodiammine platinum nitrate solution (Pt content: 50.00 g) and 3793 mL of pure water. Then, 50.00 g of a carbon fine powder (specific surface area: 800 m²/g, product name: KB) used as a carrier was added thereto while being crushed. Thereafter, 540 mL (10.8 vol%) of denatured alcohol (95% ethanol + 5% methanol) was added as a reducing agent thereto for mixing. The thus obtained mixture solution was refluxed at about 95°C for 6 hours to reduce Pt. Thereafter, the resultant was filtered, washed, and dried (60°C, 15 hours). In this manner, a Pt catalyst in which a supporting density was 50%, and an average particle size of the catalyst particles was 2 nm was obtained.

### [Formation of Barrier Layer]

On 20 g of the Pt catalyst produced as described above, a barrier layer was formed. As a polymer to be formed into the barrier layer, powdery PVAC (product name: Polyvinyl Acetate, seller: Aldrich) was dissolved in ethanol to prepare a polymer solution. In the present embodiment, PVAC was dissolved in ethanol (300 mL) used as the solvent in amounts, based on the mass of the entire catalyst (total mass of the catalyst and polymer), of 2.5 mass% (0.5 g), 5 mass% (1.1 g), 7.5 mass% (1.6 g), and 10 mass% (2.2 g) to obtain 4 types of polymer solutions.

Then, under nitrogen purging, the Pt catalyst was mixed with each of the polymer solutions to obtain a slurry. At this point, the slurry was heated to the vicinity of the boiling point (77°C), and was retained in the vicinity of 77°C. Thereafter, the slurry was stirred for 1 hour, and 300 mL of water was added thereto in a dropwise manner (5 mL/min) to precipitate PVAC, and thus, a barrier layer was formed. Thereafter, the resultant was filtered to separate the catalyst having the barrier layer formed thereon from the solution, and the resultant was washed (60°C, 30 minutes) with pure water (2 L), and dried (60°C, 15 hours), and thus, catalysts for a polymer electrolyte fuel cell of the present embodiment (Examples 1 to 4) were produced.

Comparative Example 1 (Pt catalyst): As a catalyst to be compared with the present embodiment, a Pt catalyst produced as described above was used, without forming a barrier layer thereon, as a catalyst for a polymer electrolyte fuel cell of Comparative Example.

### [Measurement of Pore Distribution]

The catalysts for a polymer electrolyte fuel cell produced in the present embodiment (PVAC/Pt-C: amount of supported PVAC: 2.5 mass%, 5 mass%, 7.5 mass%, and 10 mass%) were measured for a pore distribution. For the measurement of a pore distribution, a surface area & pore size distribution measuring system (Model: BELSORP-mini II, manufactured by Microtrac Bell Co., Ltd.) was used, and an adsorption-desorption isotherm was measured by a usually employed method under measurement conditions of performing adsorption with nitrogen at an adsorption temperature of 77 K after vacuum degassing at 120°C for 8 hours. As the measurement result, a pore distribution curve in which log differential pore volumes (dV/d (logD)) were plotted was created.

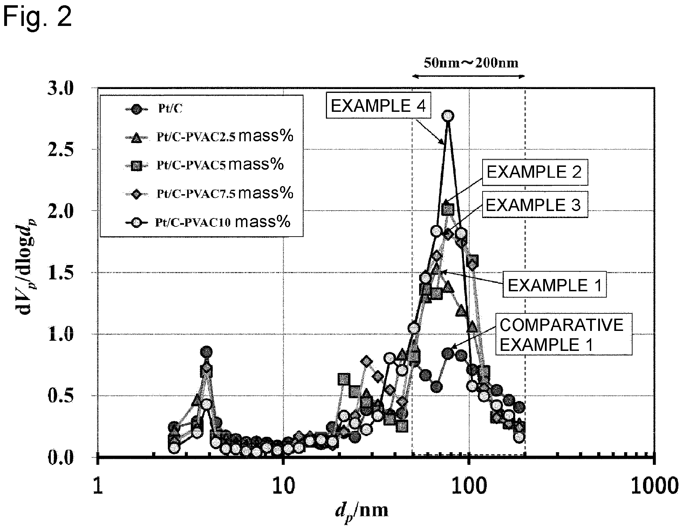

Fig. 2 illustrates pore distribution curves of the catalysts for a polymer electrolyte fuel cell of Examples 1 to 4 produced in the present embodiment (PVAC/Pt-C: amounts of supported PVAC: 2.5 mass%, 5 mass%, 7.5 mass%, and 10 mass%). Referring Fig. 2, in the catalysts for a polymer electrolyte fuel cell of Examples 1 to 4, peaks including the maximum value of the log differential pore volume (dV/d (logD)) were observed in a region of a pore size of 50 nm or more and 200 nm or less. The heights of the peaks (dV/d (logD)) in the region of 50 nm or more and 200 nm or less of these Examples were 1.0 or more. On the other hand, in the Pt catalyst of Comparative Example 1 having no barrier layer, no peak having a height of 1.0 or more was observed in the region of a pore size of 50 nm or more and 200 nm or less. It is presumed, based on these comparison results, that the barrier layer (PVAC) of the present invention had pores with a pore size of 50 nm or more and 200 nm or less. In Examples 1 to 4, when the PVSC content in the polymer solution used for forming the barrier layer was increased, the height of a peak in the region of a pore size of 50 nm or more and 200 nm or less was liable to basically increase.

In Examples 1 to 4 and Comparative Example 1, a peak was observed also in the vicinity of a pore size of 4 nm. This is derived from a pore of the carbon fine powder carrier. Besides, in Comparative Example 1, pores were counted to be present in the region of 50 nm or more and 200 nm or less, but these are probably not pores but gaps between carbon powder particles.

### [Study on State of Barrier Layer]

In the present embodiment, in order to confirm the state of the barrier layer, the catalyst was subjected to TOF-SIMS analysis. In this analysis, an analyzer (Model: TOF-SIMS-5-200, manufactured by ION-TOF) was used, and the measurement was performed under an analysis condition of high mass resolution mode under vacuum. As the analysis result, the count numbers of metal ions and ions derived from organic linking groups (fragment ions) were obtained. Then, in the profile thus obtained, the count numbers of respective components to the total count were calculated, and the count numbers of major components were compared between Comparative Example and the present embodiment. As the analysis results, the results of the catalyst of Example 2 in which the barrier layer was formed by adding 5 mass% of PVAC and the catalyst having no barrier layer (Comparative Example 1) are shown in Table 1.

**[Table 1]**

| | Count Number of Fragment Ions (× 10⁻³) | |
|---|---|---|
| | Example 2 (PVAC: 5 mass%) | Comparative Example 1 (no barrier layer) |
| Pt⁺ | 1.52 | 8.99 |
| Pt₂⁺ | 0.72 | 4.08 |
| Pt₃⁺ | 0.6 | 3.29 |
| C₂H₃O₂⁺ | 1.98 | 0.17 |
| C₄H₆O₂⁻ | 0.11 | 0.0053 |

Referring to Table 1, in the catalyst of Example 2 in which the barrier layer was formed, the count number of Pt was smaller than in the catalyst of Comparative Example having no barrier layer. Besides, in the catalyst of Example 2 in which the barrier layer was formed, the count numbers of organic linking groups (C₂H₃O₂, and C₄H₆O₂) were increased, and these groups correspond to organic linking groups of PVAC. In the TOF-SIMS analysis, a state of a top surface portion with a depth of about 1 nm of an analysis target can be analyzed. Therefore, it can be confirmed that PVAC serving as the barrier layer were present in the catalyst of Example 2, and that the barrier layer covered at least some of the catalyst particles (Pt).

### [Evaluation of Hydrophobicity of Catalyst]

Besides, in order to study the hydrophobicity of the catalyst, the amounts of water vapor adsorption of the catalysts of Examples 2, 3, and 4 (PVAC: 5 mass%, 7.5 mass%, and 10 mass%) and Comparative Example 1 (no barrier layer) were measured. For the measurement of the amount of water vapor adsorption, Model: BELSORP-aqua3, manufactured by Microtrac Bell Co., Ltd. was used as an analyzer. As a pre-treatment before the analysis, each catalyst was dried by heating at 100°C for 8 hours. As the analysis condition, the measurement temperature was set to 25°C.

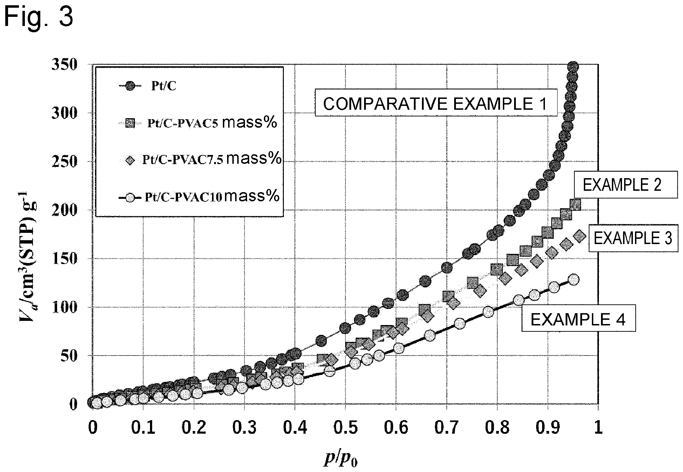

Fig. 3 illustrates water vapor adsorption isotherms of the catalysts of Examples 2, 3, and 4, and Comparative Example 1. As is understood from Fig. 3, in the catalyst of each Example provided with the barrier layer of PVAC, the amount of water vapor adsorption decreased as compared with that in the catalyst of Comparative Example 1 having no barrier layer. This decrement increased as the content of PVAC in the polymer solution was increased. It was thus confirmed that the hydrophobicity of the catalyst improved by forming the barrier layer.

### [Evaluation of Initial Activity and Durability]

The catalysts for a polymer electrolyte fuel cell of Examples 1 to 4 and Comparative Example 1 were subjected to an evaluation test of initial activity and durability. This performance test was performed by measuring mass activity. In the experiment, a single cell was used, and an MEA in which a proton conducting polymer electrolyte membrane was sandwiched between cathode and anode electrodes each having an electrode area of 5 cm × 5 cm = 25 cm² was produced for the evaluation (set use efficiency: 40%). As a pre-treatment, a current/voltage curve was drawn under conditions of a hydrogen flow rate of 1 L/min, an oxygen flow rate of 1 L/min, a cell temperature of 80°C, an anode humidifying temperature of 90°C, and a cathode humidifying temperature of 30°C. Thereafter, as main measurement, the mass activity was measured. As a test method, a current value (A) was measured at 0.9 V, and a current value per g of Pt (A/g-Pt) was obtained based on the weight of Pt applied on the electrode to calculate the mass activity, which was determined as the initial activity.

Next, the MEA after the initial activity test described above was subjected to a potential cycle test for evaluating the durability. In the potential cycle test, a pre-treatment was performed by performing sweeping between 650 and 1050 mV at a sweeping rate of 40 mV/s for 20 hours (3600 cycles). Thereafter, a main treatment was performed by performing the sweeping between 650 and 1050 mV at a sweeping rate of 100 mV/s. This main treatment was performed for 24 hours (10800 cycles), and the sweeping was performed further for 24 hours (10800 cycles) to deteriorate the catalyst. The thus deteriorated catalyst (after 25200 cycles in total through the pre-treatment and the main treatment) was measured for the mass activity.

The results of the property evaluation, the initial activity test and the durability test are shown in Table 2.

**[Table 2]**

| | Catalyst Particle | Barrier Layer | | Peak Height in 50 nm to 200 nm | Mass Activity (A/g-Pt at 0.9V) | | |
|---|---|---|---|---|---|---|---|
| | | Polymer | Content (wt%) | | Initial Activity | After Durability Test | Retention Rate *¹ |
| Example 1 | Pt | PVAC | 2.5 | 1.5 | 111.2 | 54.6 | 49.1% |
| Example 2 | | | 5 | 2.0 | 117.9 | 61.5 | 52.2% |
| Example 3 | | | 7.5 | 1.8 | 115.3 | 65.9 | 57.2% |
| Example 4 | | | 10 | 2.8 | 97.6 | 55.1 | 56.5% |
| Comparative Example 1 | Pt | none | - | - | 112.7 | 44.4 | 39.4% |

| | | | | | | | |
|---|---|---|---|---|---|---|---|
| 1*: (activity after durability test)/(initial activity) × 100 (%) | | | | | | | |

It is understood, based on Table 2, that the catalysts for a polymer electrolyte fuel cell of the present embodiment had higher activity retention rates after the deterioration test than that of Comparative Example. It was thus confirmed that the activity deterioration of a catalyst is suppressed, and the durability is improved by forming the barrier layer. Besides, as for the initial activity, it is deemed that a catalyst having a barrier layer as in the present invention is equivalent or superior to a Pt catalyst having no barrier layer (Comparative Example).

### [Confirmation of Presence of Platinum Band after Durability Test]

Next, in the fuel cell (MEA) used in the above-described durability test, it was studied whether or not a platinum band was formed after the deterioration. In this study, the deteriorated MEA was cut with an Ar ion beam, and the cross section of the anode catalyst layer/polymer solid electrolyte membrane/cathode catalyst was observed/analyzed with a SEM and an EPMA.

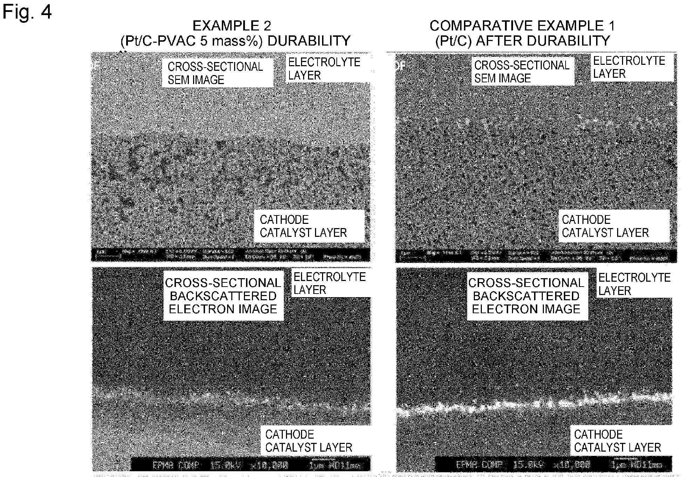

Fig. 4 illustrates SEM images and cross-sectional backscattered electron images of the cross sections of the MEAs respectively using the catalysts of Example 2 (PVAC: 5 mass%) and Comparative Example 1. Referring to the SEM images of the cross sections, in Comparative Example 1, coarse particles of about 100 nm were observed on the interface between the electrolyte membrane and the cathode catalyst layer, which are probably Pt particles. Such Pt particles were observed also inside the electrolyte membrane. On the other hand, although a few Pt particles were observed on the interface also in Example 2, there was no Pt particles inside the electrolyte membrane. In this regard, referring to the cross-sectional backscattered electron images, the brightness of the Pt particles on the interface was increased in Comparative Example 1, and this increased brightness was observed also inside the electrolyte. Besides, the brightness of Pt in the catalyst layer was reduced in Comparative Example 1. On the contrary, in Example 2, the brightness of the Pt particles was low on the interface, and the brightness of Pt was high in the catalyst layer. It is thus understood that in the catalyst layer of Comparative Example 1 using the Pt catalyst having no barrier layer, Pt had dissolved and hence Pt ions were diffused toward the electrolyte and precipitated, resulting in reducing the Pt particles present inside the catalyst layer. It is confirmed, in Example 2, that since the barrier layer was formed on the Pt catalyst, the movement/reduction of Pt from the catalyst was suppressed.

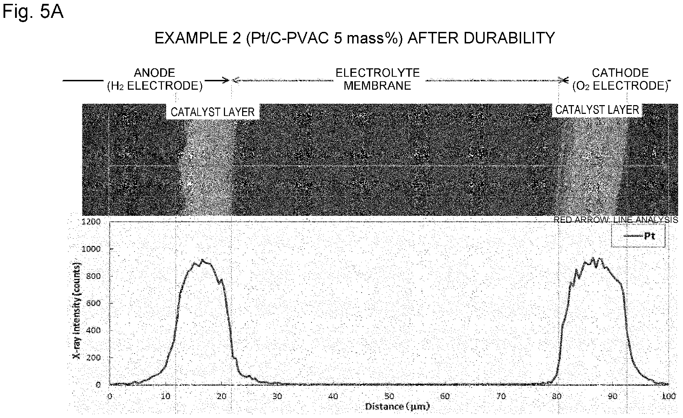

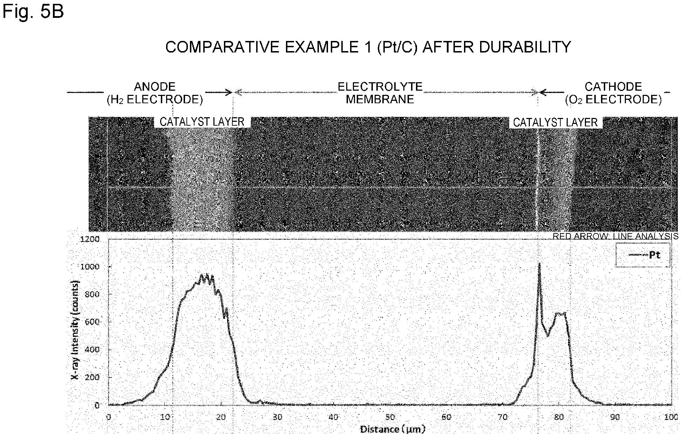

Fig. 5 illustrates results of EPMA analysis (line analysis) of the cross sections of the MEAs of Example 2 (PVAC: 5 mass%) and Comparative Example 1. In the MEA of Comparative Example 1, it is clearly confirmed that a platinum band had been formed on the interface between the catalyst layer and the electrolyte. On the contrary, in the MEA of Example 2, no platinum band was formed. As is also confirmed from the results of the SEM observation described above, it could be confirmed that when the barrier layer is formed on the catalyst, the movement of the Pt ions, which were generated when platinum dissolves, to the electrolyte membrane can be inhibited, and the formation of a platinum band can be suppressed.

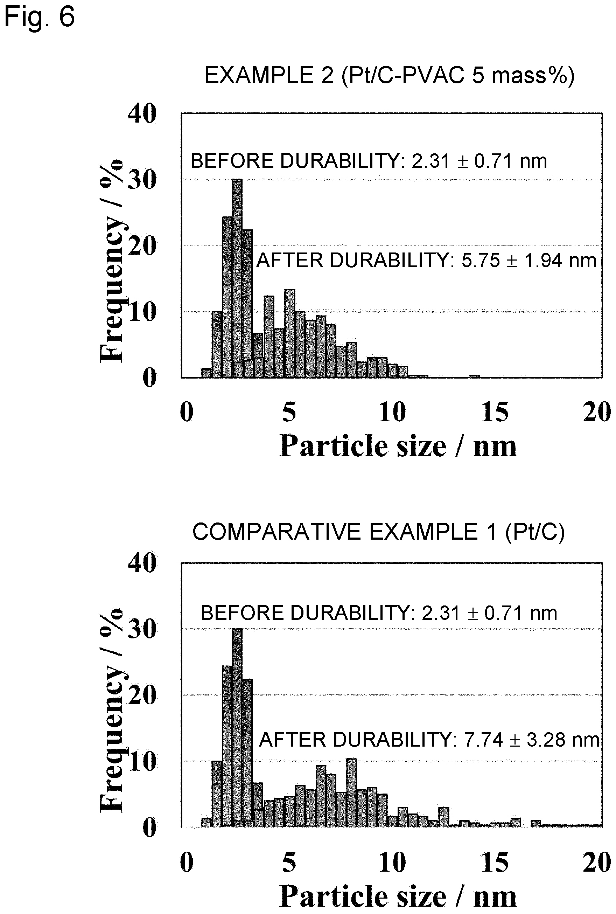

Besides, between the Pt catalysts of Example 2 (PVAC: 5 mass%) and Comparative Example 1 after the deterioration test, the particle size distributions of the Pt particles corresponding to catalyst particles were compared. The measurement of the particle size of the Pt particles was performed by a method in which 300 platinum particles were randomly measured in a plurality of images photographed with a transmission electron microscope (TEM). Then, particle size distributions of the thus measured particle sizes are illustrated in Fig. 6. It could be confirmed that the particle size was largely increased after the deterioration in the Pt catalyst of Comparative Example 1. On the other hand, it could be confirmed that the particle size increase was suppressed in Example 2 in which the barrier layer was formed, and that the distribution width was also smaller than in Comparative Example 1. It is understood from these results that the coarsening of the Pt particles can be suppressed by forming the barrier layer.

The following was confirmed based on the results of the studies on the MEAs and the catalysts after the deterioration test: When a barrier layer is formed on the surface of a catalyst as in the catalyst for a polymer electrolyte fuel cell of the present embodiment, the formation of a platinum band through the diffusion/precipitation of Pt ions toward an electrolyte membrane, and the coarsening caused by the diffusion/precipitation in the vicinity of another catalyst particle, which otherwise occur when the catalyst particles (Pt particles) dissolve, can be suppressed. It was confirmed that the catalyst for a polymer electrolyte fuel cell of the present embodiment has, owing to these effects, a high activity retention rate in a deterioration test, and is excellent in durability. It was also confirmed that the catalyst for a polymer electrolyte fuel cell of the present embodiment has initial activity equivalent or superior to that of a conventional Pt catalyst.

Second Embodiment: In the present embodiment, a catalyst for a polymer electrolyte fuel cell was produced by forming a barrier layer of PVAC on a platinum alloy catalyst (PtCo catalyst) in which PtCo was supported as a catalyst particle. Then, the initial activity and durability of this catalyst was evaluated.

### [Production of PtCo Catalyst]

A PtCo catalyst was produced by supporting and alloying Co on and with the Pt catalyst produced in First Embodiment. As a cobalt salt solution, a metal salt solution was prepared by dissolving 38 g of cobalt chloride hexahydrate (CoCl₂·6H₂O) in 500 mL of water, and 100 g of the Pt catalyst the same as that produced in First Embodiment was immersed/mixed therein. Then, to the resultant solution, 2.5 L of a sodium borohydride solution of a concentration of 1 mass% was added in a dropwise manner, the resultant was stirred as a reducing treatment, and thus, cobalt was supported on the Pt catalyst. Thereafter, the resultant was filtered/washed/dried. Then, a heat treatment for alloying was performed. The heat treatment was performed in a 100% hydrogen gas at a heat treatment temperature of 1000°C for 0.5 hours, and thus, a PtCo catalyst was obtained.

### [Formation of Barrier Layer]

On the PtCo catalyst produced as described above, a barrier layer was formed. In the same manner as in First Embodiment, a polymer solution was prepared by dissolving powdery PVAC in ethanol, and the PtCo catalyst (20 g) was mixed therewith to obtain a slurry. In the present embodiment, the PVAC content in the polymer solution was adjusted to 5 mass% based on the mass of the entire catalyst. Then, the slurry was subjected to a water adding treatment in the same manner as in First Embodiment to precipitate PVAC, and thus a barrier layer was formed. Thereafter, the resultant was filtered, washed, and dried to produce a catalyst for a polymer electrolyte fuel cell of the present embodiment (Example 5).

Comparative Example 2 (PtCo Catalyst): As a catalyst to be compared with the present embodiment, a PtCo catalyst produced as described above was used, without forming a barrier layer thereon, as a catalyst for a polymer electrolyte fuel cell of Comparative Example 2.

### [Evaluation of Initial Activity and Durability]

The PtCo catalysts of Example 5 and Comparative Example 2 produced as described above were measured for the pore distribution in the same manner as in First Embodiment, and measured for whether or not a peak was present in the region of 50 nm or more and 200 nm or less, and for the height thereof (dV/d(logD)). Then, the PtCo catalysts of Example 5 and Comparative Example 2 were subjected to an evaluation test for the initial activity and durability. The method/conditions of this evaluation test were the same as those employed in First Embodiment, and the initial activity and the activity after deterioration (after 25200 cycles in total through the pre-treatment and the main treatment) were evaluated with mass activity. The results of the property evaluation, the initial activity test and the durability test are shown in Table 3.

**[Table 3]**

| | Catalyst Particle | Barrier Layer Polymer | Peak Content (wt%) | Mass Activity (A/g-Pt at 0.9V) | | | |
|---|---|---|---|---|---|---|---|
| | | | | Height in 50 nm to 200 nm | Initial Activity | After Durability Test | Retention Rate *¹ |
| Example 5 | PtCo | PVAC | 5 | 1.8 | 189.8 | 81.2 | 42.8% |
| Comparative Example 2 | PtCo | none | - | - | 200.1 | 41.3 | 20.6% |

| | | | | | | | |
|---|---|---|---|---|---|---|---|
| 1*: (activity after durability test)/(initial activity) × 100 (%) | | | | | | | |

It is understood based on Table 3 that the catalyst of Example 5 in which the barrier layer was formed had a higher activity retention rate after the deterioration test than that of the catalyst of Comparative Example 2 having no barrier layer. Accordingly, it was confirmed that the use of a barrier layer is useful also in a catalyst using a platinum alloy as a catalyst particle.

### Industrial Applicability

The present invention allows an electrode catalyst for a polymer electrolyte fuel cell to retain favorable initial activity, and to improve the durability. The present invention contributes to the spread of fuel cells, and eventually provides a basis of a solution to an environmental problem.

## Claims

1. A catalyst for a polymer electrolyte fuel cell in which catalyst particles containing Pt as an essential catalyst metal are supported on a carbon powder carrier,
wherein the catalyst comprises a barrier layer of a hydrophobic porous polymer covering the carbon powder carrier and/or at least one of the catalyst particles.

2. The catalyst for a polymer electrolyte fuel cell according to claim 1, having a peak in a region of a pore size of 50 nm or more and 200 nm or less in a pore distribution curve based on a log differential pore volume distribution.

3. The catalyst for a polymer electrolyte fuel cell according to claim 1, wherein a peak in a region of a pore size of 50 nm or more and 200 nm or less in a pore distribution curve based on a log differential pore volume distribution has a height of 1.0 or more.

4. The catalyst for a polymer electrolyte fuel cell according to claim 1 or 2, wherein the catalyst particles contain, as the catalyst metal, Pt and a metal M, and the metal M is at least any one of Co, Ni, Mn, Fe, Ti, Zr, and Sn.

5. The catalyst for a polymer electrolyte fuel cell according to claim 1 or 2, wherein the porous polymer of the barrier layer is any one of polyvinyl acetate, polylactic acid, polymethyl methacrylate, polypropylene, polyvinyl chloride, polyethylene, polyacrylonitrile, polyvinyl alcohol, polyvinylidene fluoride, polyethylene imine, and polystyrene.

6. The catalyst for a polymer electrolyte fuel cell according to claim 1 or 2, wherein a supporting density of the catalyst particles is 30 to 70%.

7. A method for producing the catalyst for a polymer electrolyte fuel cell defined in claim 1 or 2, comprising the steps of:
providing the catalyst in which the catalyst particles containing Pt as an essential catalyst metal are supported on the carbon powder carrier;
providing a polymer solution in which a polymer is dissolved in a solvent; and
dispersing the catalyst in the polymer solution, and then heating or cooling the polymer solution or adding water to the polymer solution to precipitate the polymer on a surface of the catalyst, thereby forming the barrier layer.
